# FASCICULE DE BREVET EUROPEEN

(11) **EP 1 734 850 B1**
(45) Date de publication et mention de la délivrance du brevet: **27.08.2008**
(21) Numéro de dépôt: 05742894.8
(22) Date de dépôt: 17.03.2005
(51) Int. Cl.: A47J 27/21

(54) **APPAREIL ELECTRIQUE DE CHAUFFAGE DE LIQUIDE**
ELEKTRISCHES GERÄT ZUM ERHITZEN VON FLÜSSIGKEITEN
ELECTRICAL LIQUID-HEATING APPLIANCE

(30) Priorité: 07.04.2004 FR 0403660
(43) Date de publication de la demande: 27.12.2006
(73) Titulaire: SEB S.A., 69130 Ecully (FR)
(72) Inventeur: LABELLE, Guy, 72610 Champfleur (FR); BINOT, Jean-Pierre, 72130 Saint Ouen de Mimbre (FR)
(74) Mandataire: Kiehl, Hubert
(86) Numéro de dépôt international: PCT/FR2005/000660
(87) Numéro de publication internationale: WO 2005/099533

(56) Documents cités:
- EP-A- 0 332 445
- DE-A- 19 860 931

## Description

La présente invention se rapporte aux appareils électriques de chauffage de liquide, tels que par exemple une bouilloire électrique. Le document EP0 332 445 décrit un appareil selon le préambule de la revendication 1.

Plus particulièrement, l'invention concerne un appareil électrique de chauffage de liquide comportant un boîtier, des moyens électriques de chauffage, un interrupteur de déclenchement des moyens électriques de chauffage, un bouton qui est agencé dans une ouverture ménagée dans le boîtier, et qui présente une face d'actionnement et un doigt solidaires entre eux, le bouton étant monté basculant autour d'un axe, entre une position de mise en marche et une position d'arrêt, et un levier d'actionnement de l'interrupteur présentant une première extrémité reliée au doigt et une deuxième extrémité reliée à l'interrupteur, le levier étant mobile entre une position active dans laquelle l'interrupteur est fermé et une position inactive dans laquelle l'interrupteur est ouvert, le levier étant placé en position active par le basculement du bouton en position de mise en marche et en position inactive par le basculement du bouton en position d'arrêt.

Actuellement, les appareils de ce type, tels que les bouilloires, possèdent des boutons basculants qui font saillie du boîtier lorsqu'ils sont en position de mise en marche et/ou d'arrêt. Les boutons peuvent alors présenter des problèmes d'étanchéité à la poussière et au liquide. En outre, des corps étrangers peuvent se loger derrière le bouton, empêchant ainsi son basculement vers la position d'arrêt ou la position marche.

La présente invention a notamment pour but de pallier ces inconvénients.

A cet effet, selon l'invention, un appareil électrique du genre en question est caractérisé en ce que le bouton est rappelé par au moins un organe élastique dans une position intermédiaire dite neutre, entre la position de mise en marche et la position d'arrêt, et en ce que la liaison entre la première extrémité du levier et le doigt est une liaison lâche adaptée à autoriser un débattement libre du bouton entre la position de mise en marche et la position neutre lorsque le levier est en position active, et un débattement libre du bouton entre la position d'arrêt et la position neutre lorsque le levier est en position inactive.

Grâce à ces dispositions, le bouton revient toujours en position neutre après son actionnement en position de mise en marche ou en position d'arrêt, le levier d'actionnement demeurant en position active ou inactive. Par conséquent, en dehors de tout actionnement, le bouton demeure en position neutre, offrant un affleurement de la face d'actionnement du bouton avec l'ouverture du boîtier dans laquelle il est monté ; ceci permet d'améliorer l'étanchéité entre le bouton et le boîtier, ainsi que la sécurité de fonctionnement de l'appareil en évitant tout actionnement malencontreux du bouton. En outre, une telle construction offre une esthétique appréciable. De plus, le débattement libre entre le bouton et le levier autorise un passage, par exemple déclenché par une sécurité thermostatique, du levier de la position active vers la position inactive, même si le bouton est bloqué en position neutre par un corps étranger.

Dans divers modes de réalisation de l'appareil électroménager selon l'invention, on peut éventuellement avoir recours en outre à l'une et/ou à l'autre des dispositions suivantes :
- la face d'actionnement du bouton, en sa position neutre, est affleurante au boîtier ;
- la première extrémité du levier comporte une fenêtre dans laquelle le doigt est mobile, la longueur de la fenêtre étant au moins égale à l'amplitude du débattement du doigt depuis la position neutre vers respectivement les positions de mises en marche et d'arrêt, et inférieure à l'amplitude de débattement du doigt entre la position d'arrêt et la position de mise en marche ;
- l'organe élastique de rappel est formé d'un ressort fixé sur le bouton et présentant des bras dont les extrémités respectives sont en appui sur le boîtier pour la position neutre du bouton ;
- le boîtier comporte une poignée pourvue de l'ouverture dans laquelle est disposé le bouton ;
- l'ouverture et la face d'actionnement du bouton sont de forme oblongue, et l'axe de basculement est agencé dans un plan transversal médian passant entre les extrémités longitudinales de ladite face d'actionnement ;
- l'appareil comprend un thermostat sensible à la température du liquide contenu dans l'enceinte, ledit thermostat comportant des moyens de commande adaptés à placer le levier en position inactive lorsque la température mesurée par le thermostat est supérieure à une valeur de seuil ;
- les moyens de commande comprennent un palpeur susceptible de venir en appui contre une base d'alimentation électrique de l'appareil et adapté pour placer le levier en position inactive lorsque l'appareil n'est pas en place sur sa base d'alimentation ;
- l'appareil est constitué par une bouilloire.

D'autres caractéristiques et avantages de l'invention apparaîtront au cours de la description suivante d'un de ses modes de réalisation, donné à titre d'exemple non limitatif, en regard des dessins joints.
- la figure 1 représente une vue schématique d'un appareil selon l'invention, faisant apparaître le mécanisme du bouton à l'intérieur d'une poignée de l'appareil électrique,
- la figure 2 représente une vue simplifiée en perspective du bouton en position de mise en marche,
- la figure 3 représente une vue similaire à la figure 2 dans laquelle le bouton en position neutre,
- la figure 4 représente une vue similaire à la figure 2 dans laquelle le bouton en position d'arrêt.

Sur les différentes figures, les mêmes références désignent des éléments identiques ou similaires.

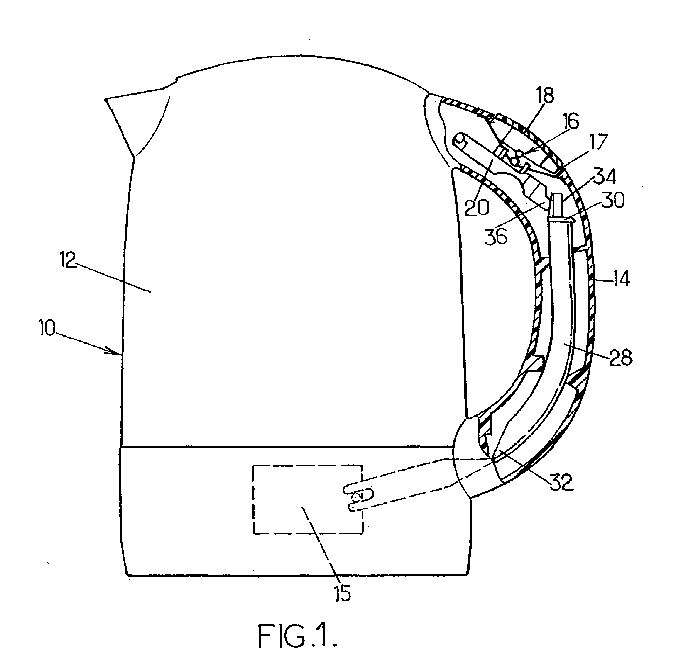

La figure 1 est une vue d'un appareil selon l'invention, représenté ici par une bouilloire électrique. Cette bouilloire comprend un boîtier 10 qui comprend une enceinte 12 destinée à être remplie de liquide à chauffer et d'une poignée 14 permettant à l'utilisateur de saisir la bouilloire et de verser le liquide. Afin de chauffer le liquide, la bouilloire comporte des moyens électriques de chauffage telle qu'une résistance électrique reliée à un interrupteur 15 pour son alimentation en électricité. L'interrupteur 15 comporte une sortie électrique prévue pour l'alimentation des moyens de chauffage et est reliée à une prise électrique.

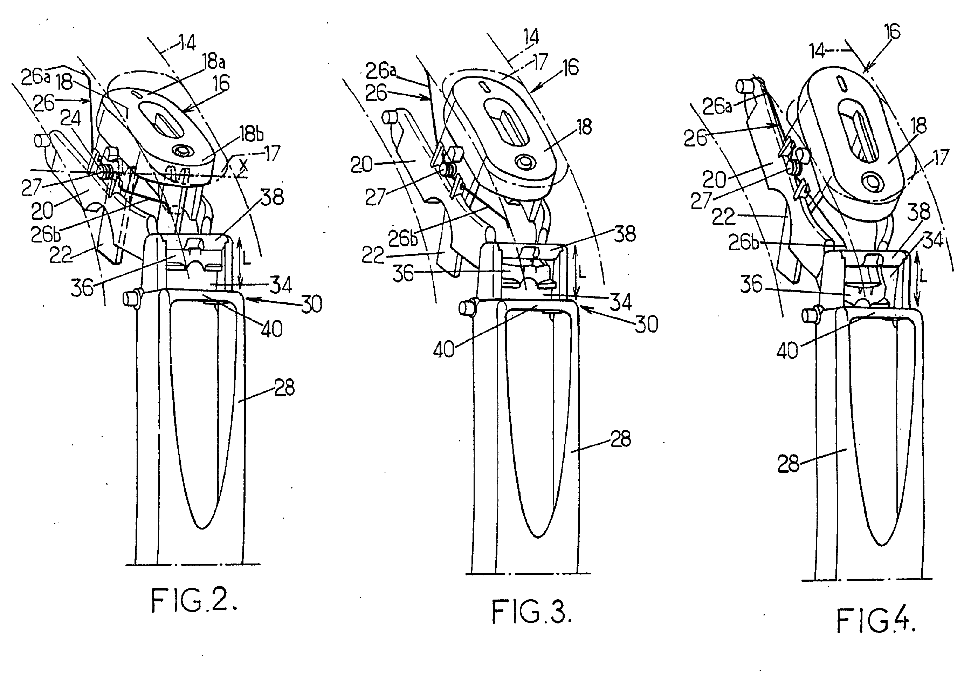

La bouilloire comporte aussi un bouton 16 qui est agencé dans une ouverture 17 pratiquée dans la poignée 14, et qui présente une face d'actionnement 18 sur laquelle l'utilisateur peut agir pour actionner l'interrupteur, afin de chauffer le liquide ou éteindre la bouilloire. Telle que représentée aux figures 2, 3 et 4, la face d'actionnement 18 du bouton 16 présente une forme sensiblement oblongue, qui s'étend entre deux extrémités 18a, 18b ; l'ouverture 17 présente également une forme oblongue. Le bouton 16 comporte aussi un doigt 20 qui est solidaire de sa face d'actionnement 18, et qui est disposé selon un plan sensiblement parallèle à celui formé par la face d'actionnement 18. Le bouton 16 est monté basculant autour d'un axe X disposé dans un plan transversal médian passant entre les extrémités longitudinales 18a, 18b de la face d'actionnement 18 du bouton 16. Ce bouton 16 bascule entre une position de mise en marche dans laquelle il ferme l'interrupteur 15 et une position d'arrêt dans laquelle il ouvre l'interrupteur 15 pour désactiver le chauffage. Ce bouton bascule sur un support 22 présentant une extrémité en forme de U sur laquelle deux ergots situés sur la surface intérieure du bouton prennent appui.

Le bouton 16 comporte en outre des moyens de rappel élastiques 26 qui le ramènent en une position intermédiaire, dite neutre. Ces moyens élastiques sont formés d'un ressort 26 composé de deux bras 26a, 26b disposés en V, et dont les extrémités respectives sont en appui sur le boîtier 10 dans leur position d'équilibre qui correspond à la position neutre du bouton 16. Le ressort 26 permet de ramener le bouton 16 dans sa position neutre entre la position de mise en marche et la position d'arrêt. Le ressort 26, est fixé sur le bouton 16 autour d'un pivot 27 d'axe sensiblement parallèle à l'axe de basculement X dudit bouton 16.

Un levier d'actionnement 28 est disposé entre le bouton 16 et l'interrupteur 15. Il présente une première extrémité 30 reliée au doigt 20 du bouton et une deuxième extrémité 32 reliée à l'interrupteur. Sous l'action du bouton basculant 16, le levier 28 est entraîné suivant un mouvement de translation en direction de l'interrupteur. La deuxième extrémité 32 du levier agit sur la sortie mécanique de l'interrupteur 15. Ainsi, le mouvement du levier 28 enclenche l'ouverture ou la fermeture de l'interrupteur 15.

Telle que représentée aux figures 2, 3 et 4, la première extrémité 30 du levier 28 reliée au doigt 20 du bouton 16, présente une fenêtre 34 dans laquelle une partie 36 du doigt 20 est mobile. Cette fenêtre 34 présente un bord supérieur 38 et un bord inférieur 40 distant d'une longueur L. La longueur L de cette fenêtre est inférieure à l'amplitude de basculement du doigt 20 entre la position d'arrêt et la position de mise en marche. L'amplitude de basculement du doigt 20 est égale à la distance la plus courte reliant les deux extrémités de l'arc de cercle décrit par le doigt 20 entre la position d'arrêt et la position de mise en marche. Ainsi le bouton 16 déplace le levier 28, en prenant appui sur le bord inférieur 40 ou sur le bord supérieur 38, vers une position inactive et vers une position active respectivement. Toutefois la longueur L de la fenêtre 34 est au moins égale à l'amplitude maximum des débattements du doigt 20 depuis la position neutre vers respectivement les positions de mise en marche et d'arrêt. Dans le mode représenté, chacun de ces débattements présente une amplitude sensiblement égale.

Les trois positions du bouton 16 sont représentées aux figures 2, 3 et 4 dans lesquelles la figure 2 représente le bouton 16 en sa position de mise en marche dans laquelle le bouton a basculé vers la première extrémité 18a de sa face d'actionnement. La figure 3 représente le bouton en sa position neutre. Et la figure 4 représente le bouton en sa position d'arrêt dans laquelle le bouton a basculé vers la seconde extrémité 18b de sa face d'actionnement. Les extrémités présentent chacune un marquage indiquant à l'utilisateur sur quelle extrémité il doit appuyer pour mettre en marche ou arrêter le chauffage. Le bouton 16 bascule entre ces trois positions et la partie 36 du doigt 20 insérée dans la fenêtre 34 décrit un arc de cercle dont la longueur dépend du basculement du bouton, c'est-à-dire de son angle de rotation par rapport à sa position initiale.

En position neutre, la partie 36 du doigt 20 du bouton est flottante dans la fenêtre 34 du levier d'actionnement 28 tel que représenté à la figure 3. Le bouton 16 est alors maintenu en équilibre grâce au ressort 26 dont les extrémités des bras 26a, 26b prennent chacune appui sur le boîtier 10.

L'invention fonctionne comme décrit ci-dessous.

Pour mettre en marche la bouilloire, l'utilisateur appuie sur une première extrémité 18a de la face d'actionnement 18 du bouton 16 et entraîne son basculement selon un premier sens. Le doigt 20 du bouton 16 solidaire de la face d'actionnement 18 est alors entraîné selon ce premier sens de basculement et se déplace dans la fenêtre 34 du levier d'actionnement 28. Etant donné que la longueur L de la fenêtre 34 est inférieure à l'amplitude de débattement du doigt 20 entre la position d'arrêt et la position de mise en marche, le doigt 20 prend alors appui sur le bord supérieur 38 de la fenêtre 34 lors de son basculement et entraîne le levier 28 jusqu'à la fin de la course de basculement du bouton. Le levier 28 est alors déplacé vers sa position active, et éventuellement au-delà, et agit sur l'interrupteur afin qu'il soit en position fermée et autorise le passage du courant pour l'alimentation des moyens de chauffage électrique de manière à chauffer le liquide à l'intérieur de l'enceinte 12.

Lorsque l'utilisateur appuie sur la seconde extrémité 18b de la face d'actionnement 18, le bouton 16 bascule dans un second sens opposé au premier sens et la partie 36 du doigt 20 du bouton 16 décrit alors un arc de cercle dans la fenêtre 34 du levier 28. Lors de sa course, la partie du doigt 20 prend appui sur le bord inférieur 40 de la fenêtre 34 et y exerce alors une force d'appui pour déplacer le levier d'actionnement 28 vers sa position inactive. Le levier d'actionnement 28 agit alors sur l'interrupteur pour le mettre en position ouverte et arrêter l'alimentation en électricité des moyens de chauffage électrique de la bouilloire.

Lorsque le bouton 16 est en position marche ou en position arrêt, les bras 26a, 26b du ressort 26 sont alors contraints entre leur point de fixation au bouton 26 et leur point de contact au boîtier 10. Le ressort 26 tend à reprendre sa position d'équilibre et donc à ramener le bouton 16 dans sa position neutre. La position neutre est rendue possible grâce à la fenêtre 34 du levier 28 dans laquelle la partie 36 du doigt 20 du bouton 16 peut basculer. Le bouton 16 est alors maintenu en position neutre uniquement grâce aux bras 26a, 26b du ressort 26, chaque extrémité de bras étant en appui sur le boîtier 10. La partie 36 du doigt 20 est alors flottante dans la fenêtre 34 du levier 28 d'actionnement car la longueur L de la fenêtre 34 est au moins égale à l'amplitude de basculement du doigt 20 depuis sa position neutre vers sa position de mise en marche ou sa position d'arrêt. La liaison entre le levier 28 et le doigt 20 est donc une liaison lâche adaptée à autoriser un débattement libre du bouton 16 entre la position de mise en marche et la position neutre lorsque le levier 28 est en position active.

De façon analogue, lorsque le bouton 16 est en position arrêt, l'un des bras 26a du ressort 26 est contraint par le basculement du bouton, et tend à se remettre en position d'équilibre. Le ressort 26 entraîne lors de sa détente le basculement du bouton 16 pour le ramener en position neutre. La partie 36 du doigt 20 se retrouve flottante dans la fenêtre 34 du levier d'actionnement 28 en position neutre.

En position neutre, la face d'actionnement 18 du bouton 16 est affleurante à la poignée 14 de la bouilloire tel que représenté à la figure 1. La face d'actionnement 18 du bouton 16 présente une courbure qui fait apparaître le bouton 16 au même niveau que la surface de la poignée 14. La position neutre permet d'améliorer l'étanchéité du bouton 16, car en position neutre le bouton 16 remplit pratiquement toute l'ouverture 17 de la poignée 14. Cette étanchéité assure une moindre pénétration de la poussière ou de liquide. De plus, cette position neutre du bouton offre à l'utilisateur un aspect plus esthétique et plus sécuritaire car le bouton 16 ne dépasse pas de la surface de la poignée 14, et évite tout actionnement malencontreux du bouton.

La bouilloire comporte également un thermostat, non représenté, sensible à la température du liquide. Ce thermostat est en communication avec l'enceinte et est relié à des moyens de commande adaptés à placer de manière automatique le levier 28 en position inactive quand la température mesurée par le thermostat est supérieure à une valeur de seuil déterminée et ainsi enclencher l'interrupteur en position ouverte. Lorsque le levier 28 est en position active, et que l'eau est chauffée, le bouton 16 est dans sa position neutre, tel que décrit précédemment. Lorsque le levier 28 est ramené de sa position active vers sa position inactive par les moyens de commande, le bouton 16 reste en position neutre lors de l'arrêt automatique du chauffage de l'eau, car la longueur L de la fenêtre du levier est au moins égale à l'amplitude de débattement du doigt depuis la position de mise en marche vers la position neutre.

Selon une autre variante de réalisation, la bouilloire est montée sur une base d'alimentation électrique. Les moyens de commande comprennent un palpeur susceptible de venir en appui contre la base d'alimentation. Ces moyens sont adaptés à placer le levier en position inactive lorsque la bouilloire n'est pas en place sur sa base d'alimentation. Dans ce cas, le bouton 16 en position neutre reste affleurant à la poignée 14, comme décrit précédemment.

L'invention n'est nullement limitée aux modes de réalisation décrits et illustrés qui ne sont donnés qu'à titre d'exemple.

## Revendications

1. Appareil électrique de chauffage de liquide comportant :
- un boîtier (10),
- des moyens électriques de chauffage,
- un interrupteur (15) de déclenchement des moyens électriques de chauffage,
- un bouton (16) qui est agencé dans une ouverture (17) ménagée dans le boîtier (10), et qui présente une face d'actionnement (18) et un doigt (20) solidaires entre eux, le bouton (16) étant monté basculant autour d'un axe (X), entre une position de mise en marche et une position d'arrêt,
- un levier d'actionnement (28) de l'interrupteur (15) présentant une première extrémité (30) reliée au doigt (20) et une deuxième extrémité (32) reliée à l'interrupteur (15), le levier (28) étant mobile entre une position active dans laquelle l'interrupteur est fermé et une position inactive dans laquelle l'interrupteur (15) est ouvert, le levier (28) étant placé en position active par le basculement du bouton (16) en position de mise en marche et en position inactive par le basculement du bouton (16) en position d'arrêt,
**caractérisé en ce que** le bouton (16) est rappelé par au moins un organe élastique (26) dans une position intermédiaire dite neutre, entre la position de mise en marche et la position d'arrêt, et **en ce que** la liaison entre la première extrémité (30) du levier (28) et le doigt (20) est une liaison lâche adaptée à autoriser un débattement libre du bouton (16) entre la position de mise en marche et la position neutre lorsque le levier (28) est en position active, et un débattement libre du bouton (16) entre la position d'arrêt et la position neutre lorsque le levier (28) est en position inactive.

2. Appareil selon la revendication 1, dans lequel la face d'actionnement (18) du bouton (16), en sa position neutre, est affleurante au boîtier (10)

3. Appareil selon la revendication 1 ou 2, dans lequel la première extrémité (30) du levier (28) comporte une fenêtre (34) dans laquelle le doigt (20) est mobile, la longueur (L) de la fenêtre (34) étant au moins égale à l'amplitude du débattement du doigt (20) depuis la position neutre vers respectivement les positions de mises en marche et d'arrêt, et inférieure à l'amplitude de débattement du doigt (20) entre la position d'arrêt et la position de mise en marche.

4. Appareil selon l'une quelconque des revendications précédentes, dans lequel l'organe élastique (26) de rappel est formé d'un ressort fixé sur le bouton (16) et présentant des bras (26a, 26b) dont les extrémités respectives sont en appui sur le boîtier (10) pour la position neutre du bouton (16).

5. Appareil selon l'une quelconque des revendications précédentes, dans lequel le boîtier (10) comporte une poignée (14) pourvue de l'ouverture (17) dans laquelle est disposé le bouton (16).

6. Appareil selon l'une quelconque des revendications précédentes, dans lequel l'ouverture (17) et la face d'actionnement (18) du bouton (16) sont de forme oblongue, et l'axe de basculement (X) est agencé dans un plan transversal médian passant entre les extrémités longitudinales (18a, 18b) de ladite face d'actionnement (18).

7. Appareil selon l'une quelconque des revendications précédentes, dans lequel il comprend un thermostat sensible à la température du liquide contenu dans l'enceinte, ledit thermostat comportant des moyens de commande adaptés à placer le levier (28) en position inactive lorsque la température mesurée par le thermostat est supérieure à une valeur de seuil.

8. Appareil selon la revendication 7, dans lequel les moyens de commande comprennent un palpeur susceptible de venir en appui contre une base d'alimentation électrique de l'appareil et adapté pour placer le levier (28) en position inactive lorsque l'appareil n'est pas en place sur sa base d'alimentation.

9. Appareil selon l'une quelconque des revendications précédentes, dans lequel il est constitué par une bouilloire.

## Claims

1. Electric liquid-heating appliance comprising:
- a housing (10),
- electric heating means,
- a switch (15) triggering the electric heating means,
- a button (16) that is arranged in an opening (17) provided in the housing (10) and that has an actuation face (18) and a finger (20) secured to each other, the button (16) being mounted so as to tilt about an axis (X) between an on position and an off position,
- a lever (28) for actuating the switch (15) having a first end (30) connected to the finger (20) and a second end (32) connected to the switch (15), the lever (28) being able to move between an active position in which the switch is closed and an inactive position in which the switch (15) is open, the lever (28) being placed in the active position by tilting the button (16) into the on position and in the inactive position by tilting the button (16) into the off position,
**characterised in that** the button (16) is returned by at least one elastic member (26) into a so-called neutral intermediate position, between the on position and the off position, and **in that** the connection between the first end (30) of the lever (28) and the finger (20) is a slack connection adapted to allow a free movement of the button (16) between the on position and the neutral position when the lever (28) is in the active position, and a free movement of the button (16) between the off position and the neutral position when the lever (28) is in the inactive position.

2. Appliance according to claim 1, in which the actuation face (18) of the button (16), in its neutral position, is flush with the housing (10).

3. Appliance according to claim 1 or 2, in which the first end (30) of the lever (28) comprises a window (34) in which the finger (20) is able to move, the length (L) of the window (34) being at least equal to the amplitude of the movement of the finger (20) from the neutral position towards respectively the on and off positions, and less than the amplitude of movement of the finger (20) between the off position and the on position.

4. Appliance according to any one of the preceding claims, in which the elastic return member (26) is formed by a spring fixed to the button (16) and having arms (26a, 26b) the respective ends of which are in abutment on the housing (10) in the neutral position of the button (16).

5. Appliance according to any one of the preceding claims, in which the housing (10) comprises a handle (14) provided with the opening (17) in which the button (16) is disposed.

6. Appliance according to any one of the preceding claims, in which the opening (17) and the actuation face (18) of the button (16) are oblong in shape, and the tilt axis (X) is arranged in a transverse mid-plane passing between the longitudinal ends (18a, 18b) of the said actuation face (18).

7. Appliance according to any one of the preceding claims, in which it comprises a thermostat sensitive to the temperature of the liquid contained in the chamber, the said thermostat comprising control means adapted to place the lever (28) in the inactive position when the temperature measured by the thermostat is above a threshold value.

8. Appliance according to claim 7, in which the control means comprise a sensor able to come in abutment against an electrical supply base of the appliance and adapted to place the lever (28) in the inactive position when the appliance is not in place on its supply base.

9. Appliance according to any one of the preceding claims, in which it consists of a kettle.

## Patentansprüche

1. Elektrisches Gerät zum Erhitzen von Flüssigkeiten mit:
- einem Gehäuse (10),
- einer elektrischen Heizvorrichtung,
- einem Schalter (15) zum Einschalten der elektrischen Heizvorrichtung,
- einem Knopf (16), der in einer im Gehäuse (10) ausgebildeten Öffnung (17) angeordnet ist und der eine Betätigungsfläche (18) und einen Finger (20) aufweist, die miteinander fest verbunden sind, wobei der Knopf (16) zwischen einer Einschaltstellung und einer Ausschaltstellung um eine Achse (X) schwenkbar montiert ist,
- einem Betätigungshebel (28) des Schalters (15) mit einem ersten Ende (30), das mit dem Finger (20) verbunden ist, und einem zweiten Ende (32), das mit dem Schalter (15) verbunden ist, wobei der Hebel (28) zwischen einer aktiven Stellung, in der der Schalter geschlossen ist, und einer inaktiven Stellung, in der der Schalter (15) offen ist, beweglich ist und wobei der Hebel (28) durch das Schwenken des Knopfes (16) in die Einschaltstellung in seine aktive Stellung und durch Schwenken des Knopfes (16) in die Ausschaltstellung in seine inaktive Stellung gebracht wird,
**dadurch gekennzeichnet, dass** der Knopf (16) durch mindestens ein elastisches Element (26) in eine sogenannte neutrale Mittelstellung, die zwischen der Einschaltstellung und der Ausschaltstellung liegt, zurückgestellt wird und dass die Verbindung zwischen dem ersten Ende (30) des Hebels (28) und dem Finger (20) eine lose Verbindung ist, welche dafür eingerichtet ist, ein freies Ausschwenken des Knopfes (16) zwischen der Einschaltstellung und der Neutralstellung zu ermöglichen, wenn der Hebel (28) in seiner aktiven Stellung ist, und ein freies Ausschwenken des Knopfes (16) zwischen der Ausschaltstellung und der Neutralstellung zu ermöglichen, wenn der Hebel (28) in der inaktiven Stellung ist.

2. Gerät nach Anspruch 1, bei dem die Betätigungsfläche (18) des Knopfes (16) in seiner Neutralstellung mit dem Gehäuse (10) glatt abschließt.

3. Gerät nach Anspruch 1 oder 2, bei dem das erste Ende (30) des Hebels (28) ein Fenster (34) aufweist, in dem der Finger (20) beweglich ist, wobei die Länge (L) des Fensters (34) mindestens gleich der Amplitude des Ausschwenkens des Fingers (20) von seiner Neutralstellung zu jeweils der Einschalt- und Ausschaltstellung und kleiner als die Amplitude des Ausschwenkens des Fingers (20) zwischen der Ausschaltstellung und der Einschaltstellung ist.

4. Gerät nach einem der vorangehenden Ansprüche, worin das elastische Rückstellelement (26) von einer am Knopf (16) befestigten Feder gebildet ist und Arme (26a, 26b) aufweist, deren Enden bei der Neutralstellung des Knopfes (16) jeweils am Gehäuse (10) anschlagen.

5. Gerät nach einem der vorangehenden Ansprüche, worin das Gehäuse (10) einen Griff (14) aufweist, der mit einer Öffnung (17) versehen ist, in welcher der Knopf (16) angeordnet ist.

6. Gerät nach einem der vorangehenden Ansprüche, worin die Öffnung (17) und die Betätigungsfläche (18) des Knopfes (16) länglich geformt sind und die Schwenkachse (X) in einer in der Mitte gelegenen Querebene angeordnet ist, die zwischen den Längsenden (18a, 18b) der Betätigungsfläche (18) verläuft.

7. Gerät nach einem der vorangehenden Ansprüche, worin es einen Thermostaten aufweist, der auf die Temperatur der im Innenraum enthaltenen Flüssigkeit anspricht, wobei der Thermostat eine Steuervorrichtung aufweist, die dafür eingerichtet ist, den Hebel (28) in die inaktive Stellung zu bringen, wenn die vom Thermostat gemessene Temperatur höher als ein Schwellenwert ist.

8. Gerät nach Anspruch 7, worin die Steuervorrichtung einen Fühler aufweist, der in Anschlag gegen eine Basis der elektrischen Stromversorgung des Geräts kommen kann und dafür eingerichtet ist, den Hebel (28) in die inaktive Stellung zu bringen, wenn das Gerät nicht an seinem Platz auf der Stromversorgungsbasis ist.

9. Gerät nach einem der vorangehenden Ansprüche, das aus einem Wasserkocher besteht.
